# EUROPEAN PATENT SPECIFICATION

(11) **EP 1 382 499 B1**
(45) Date of publication and mention of the grant of the patent: **01.03.2006**
(21) Application number: 03077305.5
(22) Date of filing: 18.07.2003
(51) Int. Cl.: B60R 25/02, B62D 33/07

(54) **Security assembly**
Diebstahlsicherung
Dispositif anti-vol

(30) Priority: 19.07.2002 NL 1021117
(43) Date of publication of application: 21.01.2004
(73) Proprietor: Raban Export/Import Ltd., 42842 Bat Hefer (IL)
(72) Inventor: Reinders, Robert Paul, 5236 SG 's-Hertogenbosch (NL)
(74) Representative: Brookhuis, Hendrik Jan Arnold

(56) References cited:
- EP-A- 0 212 008
- WO-A-01/58737
- DE-A- 3 249 408
- US-A- 4 440 252

## Description

The present invention relates to a device for tilting a vehicle cab, comprising a piston-cylinder assembly, which is driven using hydraulic fluid, a pump for the said hydraulic fluid, conduits for the said hydraulic fluid and actuating means for selectively supplying the said hydraulic fluid to the said piston-cylinder assembly, an electrically actuable valve, which can be controlled via a security control unit, being arranged in one of the conduits.

An assembly of this type is generally known in the prior art from DE 3 249 408 A1 and is found primarily in lorries. In this case, part of the driving engine or other equipment which is accessible for maintenance is located beneath the cab. This access is facilitated by designing the cab to be pivotable. The cab is raised and lowered with the aid of a hydraulic piston/cylinder assembly. Driving force for this operation is obtained via a pump which is driven by the vehicle engine and can also be used for power steering, braking and the like. An electrically actuable valve, which can be controlled via a security control unit, is arranged in one these conduits.

The problem of lorry theft is constantly increasing. Although theft of the lorry itself is attractive, it is generally the freight carried by the lorry which is the primary reason to steel it. Further security measures at access doors to a cab ultimately have no effect, since potential thieves can simply break a window and in this way still gain access to the cab. Numerous technical solutions have been proposed for preventing theft, but are either so complicated that it is not possible to sufficiently ensure that the security feature will not be activated during operation, or are easy for potential thieves to overcome. This means, inter alia, that hydraulic conduits which are blocked by a theft prevention unit or conduits which no longer carry flow can easily be bypassed by potential thieves, so that the effect of these measures is eliminated.

The object of the present invention is to provide further security for vehicles and in particular for lorries.

According to the present invention, a relatively simple electronic circuit can be used to actuate an electrical valve which blocks supply of hydraulic fluid to the operating means of the tilting cab. A simple electronic circuit of this nature is very easy to secure in such a manner that it cannot be bypassed. On the other hand, potential thieves will find it difficult to take further measures, since a primary conditions for accessibility of the lorry operating system is that cab be tilted.

According to an advantageous embodiment of the invention, the valve which can be electrically actuated by the control unit is a blocking valve arranged in the conduit for feeding hydraulic fluid to the piston-cylinder assembly for the tilting cab. This can be of particularly simple design. In particular, there is no need to take security measures, which prevent problems of incorrect functioning during operation. Unlike structures which, for example, block braking, there is no risk of dangerous situations occurring in the event of incorrect operation of the blocking valve according to the invention. At most, during operation the block valve could become blocked, but in such a situation the tilting of a cab is of no relevance. Should the blocking valve become blocked during maintenance work, this means that the cab can no longer be tilted but does not cause an unsafe situation.

The device described above can be used both for structures in which the cab returns to the at-rest position under its own weight and in structures in which the cab is moved by means of a double-acting hydraulic jack. Depending on which of these options is used, the blocking valve will be designed either with two ports or with three ports.

The security feature described above is combined with a security feature in the hydraulic system of a power steering system. An example of a security feature of this type is known from international patent application WO 01/58737. In this case, the return flow of hydraulic fluid from a power steering arrangement is blocked. Consequently, it is no longer possible to turn the steering wheel of a vehicle. According to the present invention, it is possible to combine it with the same security control unit. Moreover, according to a particular variant of the present invention, it is possible for the valves in question, i.e. the valve which blocks the supply of fluid to the piston-cylinder assembly of the tilting cab and the valve which blocks the return flow of the power steering, to be combined in a single housing and for these valves to be driven by a single drive motor. Moreover, it is possible to use a common pump for driving these circuits.

The combination of the drive for blocking the tilting cab and the power steering results in a structure which is inexpensive to implement, operates efficiently and takes up little space.

According to a further advantageous embodiment of the invention, there may be a common safety feature, preventing the valves in question from being actuated when the vehicle engine is running.

The invention will be explained in more detail below on the basis of an exemplary embodiment of the invention which is illustrated in the drawing, in which:
- Fig.1: diagrammatically depicts a lorry provided with a tilting cab;
- Fig. 2: highly diagrammatically depicts various fluid circuits for power steering and tilting cab;
- Fig. 3: shows the circuit diagram showing Fig. 2 which incorporates the security feature according to the present invention;
- Fig. 4: shows a perspective view of the valve housing according to the invention;
- Fig. 5: shows the cross section on line V-V in Fig. 4;
- Fig. 6: shows the cross section on line VI-VI in Fig. 4;
- Fig. 7: diagrammatically depicts a variant of the blocked control unit as described above; and
- Fig. 8: shows the variant shown in Fig. 7 in its active position.

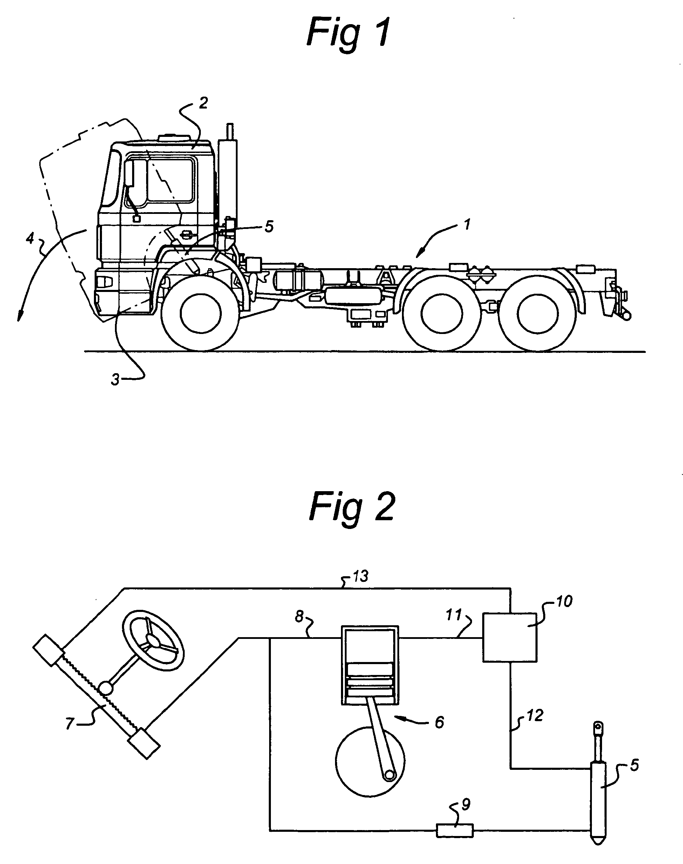

In Fig. 1, 1 denotes a vehicle. This is preferably a lorry or other vehicle with a tiltable cab 2. The cab can be tilted about pivot axis 3, in the direction indicated by arrow 4. The cab is lifted with the aid of diagrammatically depicted piston-cylinder assembly 5.

Fig. 2 shows a highly diagrammatic view of part of the hydraulic conduit system of the vehicle 1. A pump for hydraulic fluid is denoted by 6. This can be electrically actuated but is preferably actuated by the vehicle engine (not shown). From the pump, a pressure conduit 8 leads on the one hand to a power steering 7 and on the other hand, via an actuation means 9, to the piston-cylinder assembly 5. A return conduit 12 extends from piston-cylinder assembly 5 to collection tank 10. The return conduit of the hydraulic power steering is denoted by 13 and likewise opens out into collection tank 10. From there, an inlet conduit 11 extends to pumps 6. It will be understood that all kinds of structures and controls are present in order to implement the system which has been schematically described above.

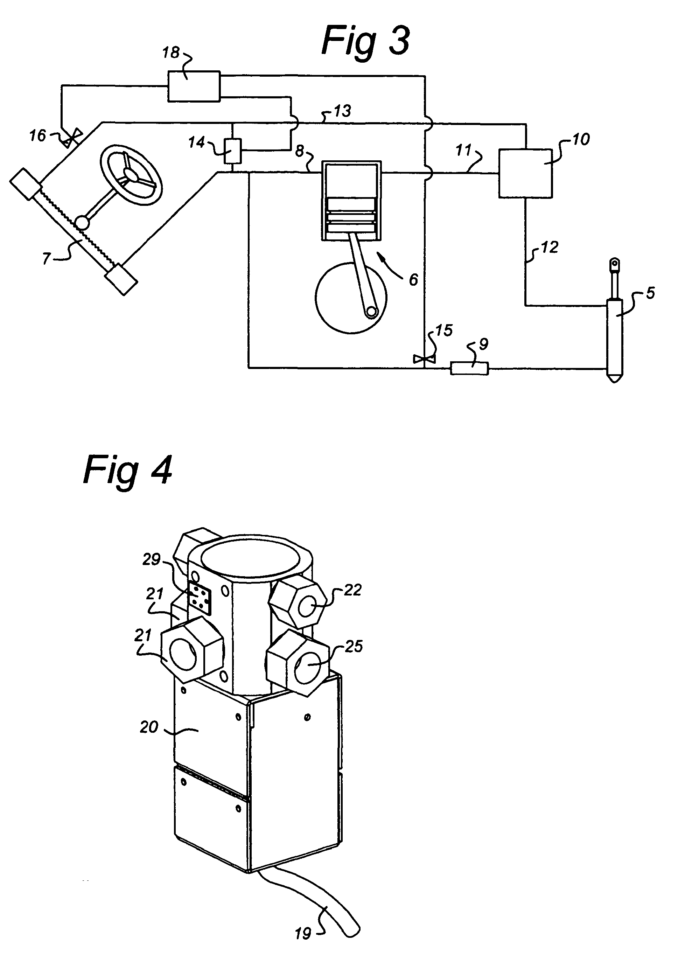

Fig. 3 shows the hydraulic system in accordance with Fig. 2 incorporating a number of changes. There is a security control unit 18, which is used to control a blocking valve 16 in the return conduit 13 of the power steering 7. Also a blocking valve 15 in the conduit for feeding hydraulic fluid to the piston-cylinder assembly 5. Moreover, a bypass conduit 14 with restriction is actuated using control unit 18.

During "normal" operation, the blocking valves 15 and 16 will not be active, i.e. will allow unimpeded flow of hydraulic fluid. Bypass 14 is also not active, i.e. it is impossible for any liquid to flow direct from outlet conduit 8 to return conduit 13.

However, in the secured state of the vehicle the blocking valves 15 and 16 are active. Consequently, it is impossible for any fluid to be fed to piston-cylinder assembly 5, irrespective of actuation of control unit 9. Moreover, the steering wheel of the vehicle cannot be turned, since the return of hydraulic fluid is not possible. As a safety measure to prevent the build-up of pressure on account of pump 6 being active, bypass 14 is opened, with the result that conduits 8 and 13 are electrically connected to one another (if appropriate via restriction).

On account of the fact that the cab cannot be tilted using the system described above, it is impossible for potential thieves to reach the system described above. It is only necessary for control unit 18 to be designed in such a manner that its operation cannot be blocked.

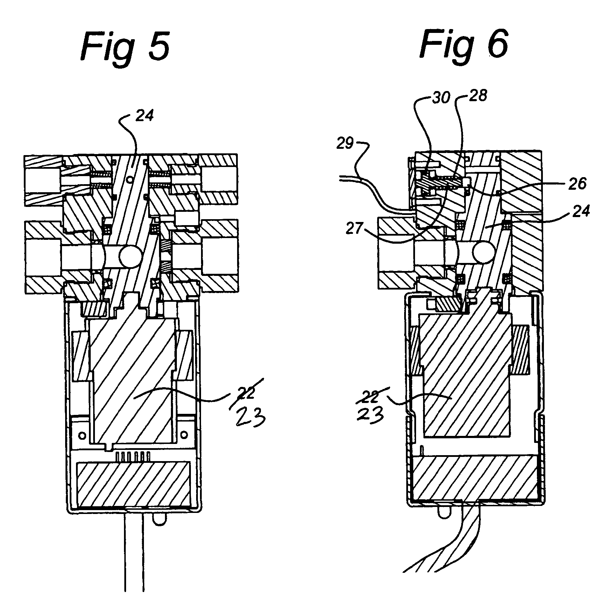

Figures 4 - 6 show details of the valves. Figure 4 shows that there is a common valve housing 20. The connection conduits to the return conduit 13 of the power steering (valve 16) are denoted by 21. A bypass port is denoted by 25. The ports for valve 15 are denoted by 22. 19 denotes the connection conduit to security control unit 18. It can be seen from Figures 5 and 6 that there is an electric motor 22 which drives a valve body 24 in which both the valve body of valve 15 and the valve body of further valve 16 are arranged. Seals and other accessories which are customary for valves of this type are also present. The electric motor is provided with a speed reduction, which is diagrammatically depicted in Figure 6.

Various couplings can be brought about by rotation of the valve body 24 with the aid of electric motor.

Moreover, there is a safety feature which can be seen from the cross section presented in Figure 6. The valve body 24 is provided with a recess 26. In the operating state, i.e. in the state in which the valve 15 and 16 are open and bypass 14 is not present, this recess 26 is aligned with a bore in which there is a pin 27 which, in the vicinity of its end, is provided with a piston 30. The piston is under load from a spring 28 which presses the piston away from the recess 26. The other side of the piston is located in a chamber to which a conduit 29 is connected. This conduit 29 may, for example, be an oil-pressure conduit or other pressure conduit of the vehicle engine. When the vehicle engine is running, piston 30 will move pin 27 into recess 26 as a result of the pressure built up on conduit 29. In this position, it is impossible to rotate valve body 24, with the result that when the vehicle is driving it is not possible in particular to switch off the power steering.

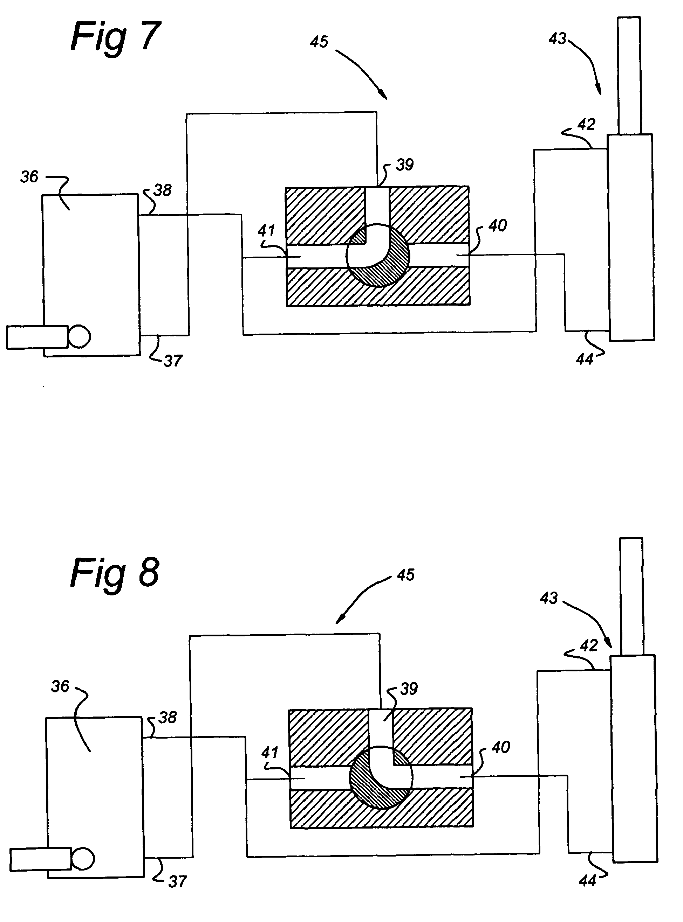

According to a variant of the invention, not only the feed conduit for lifting the tilting cab, but also its return conduit, is incorporated in the switching security system. This variant is diagrammatically indicated in Fig. 7 and 8 only with regard to the cab pump. Of course, a combination with the other systems described above, such as power steering, is possible. In Fig. 7 and 8, the hydraulic pressure-applying pump, i.e. the cab pump, is denoted by 36. It is provided with a pressure port 37 and a return port 38. 45 denotes a three-way shut-off valve. This valve comprises a pressure inlet 39, a pressure outlet 40 and a return port 41. This return port 41 is connected both to the return 38 of pump 36 and to return 42 of cab cylinder 43. 44 denotes the lifting side of the cab cylinder 43. The passage through the body which can rotate in the shut-off valve is preferably of L-shaped design in order to obtain the three-way action.

The device described in Fig. 7 and 8 operates in the following way:
in the position shown in Fig. 7, the blocked position, there is no connection between the pressure inlet 39 and pressure outlet 40. Pressure inlet 39 is connected to return port 41, so that fluid originating from pressure side 37 moves back via pressure inlet 39 to return 38. Return 44 of the cylinder remains connected to return 38.

In the unblocked position shown in Fig. 8, the pressure inlet 39 is connected to pressure outlet 40, which in turn is connected to the lifting side 44 of the cylinder. Of course, there may be actuating means for the lifting cylinder either upstream or downstream of shut-off valve 45.

The three-way shut-off valve used here may be any three-way shut-off valve which is known from the prior art. However, it is possible, in a relatively simple way, to provide the shut-off valve shown in Fig. 4, and more particularly its upper part, with a third port.

The structures described with reference to Fig. 7 and 8 can be used in particular for cab-tilting mechanisms in which both the upward stroke and the downward stroke are controlled using hydraulic pressure.

Although the invention has been described above on the basis of a preferred embodiment of the invention, it will be understood that numerous modifications to this embodiment can be made without departing from the scope of the present invention. For example, it is possible to control other hydraulic systems with the aid of the structure in accordance with the invention. Variants of this type will be readily apparent to the person skilled in the art and lie within the scope of the appended claims.

## Claims

1. Assembly comprising a device for tilting a vehicle cab (2), comprising a piston-cylinder assembly (5), which is driven using hydraulic fluid, a pump (6, 36) for the said hydraulic fluid, conduits for the said hydraulic fluid and actuating means (9) for selectively supplying the said hydraulic fluid to the said piston-cylinder assembly, an electrically actuable valve (15, 45), which can be controlled via a security control unit (18), being arranged in one of the conduits, **characterized in that** said assembly comprises a hydraulically acting power steering arranged in the same vehicle, a further electrical valve (16) being arranged in a conduit of said power steering, controlled via said security control unit (18), said valve and said further valve comprising a common drive (23).

2. Assembly according to Claim 1, in which said electrically actuable valve (15, 45) comprises a blocking valve arranged in the conduit for feeding hydraulic fluid to the said piston-cylinder assembly (15).

3. Assembly according to Claim 1 or 2, in which said further valve comprises two positions, a first, unsecured position, in which said hydraulic fluid assists the action of the power steering, and a second, secured position, in which fluid emanating from the said power steering is blocked.

4. Assembly according to Claim 3, in which, in said second secured position, there is a bypass (14) between the supply and discharge of fluid to/from the said power steering.

5. Assembly according to one of preceding claims, comprising a security feature which prevents the said further valve from being switched when the driving engine of the vehicle is running.

6. Assembly according to one of the preceding claims, comprising a valve housing in which a valve body and further valve body are arranged, as well as an electric drive motor (23) which controls the said valve bodies.

7. Assembly according to Claim 6, in which the said valve body and further valve comprise a single rotatable body.

## Patentansprüche

1. Vorrichtung mit einem Kippvorrichtung zum Kippen des Fahrerhaus eines Fahrzeugs, mit einer Kolben-Zylindervorrichtung (5) der von Hydraulisches Druckmittel betatigt wird, einer Pumpe (6,36) für das hydraulische Druckmittel, Leitungen für das Druckmittel und einer Bedienungsvorrichtung zur selective Zuführ von hydraulisches Druckmittel zum Kolben-Zylindervorrichtung, einem elektrisch verstellbaren Ventil (15,45), dass durch einen Sicherheitregeleinheit regelbar ist, welches Ventil in einer der Leitungen angeordnet ist, **dadurch gekennzeichnet, dass** die Vorrichtung ein hydraulisch hilfskraftunterstütztes Lenksystem in dem selben Fahrzeug aufweist, wobei ein weiteres elektrisches Ventil (16) angeordnet ist in eine Leitung des Lenksystems, welches Ventil betätigbar ist durch den Sicherheitregeleinheit (18), wobei das Ventil and das weitere Ventil einen gemeinsamen Antrieb (23) haben.

2. Vorrichtung nach Anspruch 1, wobei das elektrische Ventil (15,45) ein Sperrventil aufweist in der Leitung zur Zufuhr von hydraulisch Druckmittel zur Kolben-Zylindervorrichtung (5).

3. Vorrichtung nach Anspruch 1 oder 2, wobei das weitere Ventil zwei Stellungen aufweist, eine erste, nicht gesicherte Stellung, worin das hydraulisch Druckmittel die Wirkung des Lenksystems unterstützt, und eine zweite, gesicherte Stellung, worin das aus dem Lenksystem austretende Druckmittel blockiert wird.

4. Vorrichtung nach Anspruch 3, wobei in die zweite gesicherte Stellung einen Umlauf vorhanden ist zwischen den Zufuhr und Abfuhr von hydraulisch Druckmittel zum/aus das Lenksystems.

5. Vorrichtung nach eine oder mehrere der vorgehende Anspruche, mit einem Sicherheitelement dass vorbeugt dass das weitere Ventil geschaltet wird wenn der Antriebsmotor des Fahrzeugs lauft.

6. Vorrichtung nach eine oder mehrere der vorgehende Anspruche, mit einem Ventilgehause in dem einen Ventilelement und einen weiteren Ventilelement angeordnet sind, und auch einem elektrischen Antriebsmotor (23) der den Ventilelemente betreibt.

7. Vorrichtung nach Anspruch 6, wobei das Ventilelement und das weiteres Ventilelement ein einziges drehbares Ventilelement sind.

## Revendications

1. Système comprenant un dispositif pour incliner une cabine de véhicule, comprenant un assemblage piston-vérin, ce qui est conduit en utilisant un fluide hydraulique, une pompe pour ledit fluide hydraulique, conduits pour ledit fluide hydraulique et moyens de déclenchement de fournir sélectivement ledit fluide hydraulique à ledit assemblage piston-vérin, une soupape électriquement actuable, ce qui peut être commandé par l'intermédiaire d'une unité de commande de sécurité, étant arrangé dans un des conduits, **caractérisé en ce que** ledite systeme comprenne un système de direction assistée hydraulique disposé dans le même véhicule, encore une autre soupape électrique étant arrangée dans un conduit du système de direction assistée hydraulique, commandée par l'intermédiaire de ladite unité de commande de sécurité, ladite soupape et autre soupape comportant une commande commune.

2. Système selon revendication 1, dans lequel la soupape actuable électriquement comprent une soupape de blocage arrangé dans le conduit pour alimenter le fluide hydraulique à ledit piston-vérin.

3. Système selon revendication 1 ou 2, dans lequel l'autre soupape comporte deux positions, un premier position, sans securite, dans lequel ledit fluide hydraulique aide l'action du système de direction assistée hydraulique, et un seconde position fixée, en lequel fluide émanee du système de direction assistée hydraulique est bloqué.

4. Système selon revendication 3, dans lequel, en ledite deuxième position fixé, il y a une déviation entre l'approvisionnement et la décharge du fluide à et venant du système de direction assistée hydraulique.

5. Système selon l'une des revendications précédentes, comportant un dispositif de sécurité qui empêche ladite soupape supplémentaire d'être commuté quand le moteur de conduite du véhicule tourne.

6. Système selon l'une des revendications précédentes, comportant un carter de soupape en lequel un corps de soupape et un corps de soupape supplementaire sont arrangés, aussi bien qu'un moteur électrique d'entraînement qui commande lesdits corps de soupape.

7. Système selon l'une des revendications précédentes, dans lequel ledit corps de soupape et de soupape supplémentaire comportent un corps rotatif unique.
